# EUROPEAN PATENT APPLICATION

(11) **EP 4 687 061 A1**
(43) Date of publication of application: **04.02.2026**
(21) Application number: 24194636.7
(22) Date of filing: 14.08.2024
(51) Int. Cl.: G06F 30/17, G06F 30/27

(54) **ACOUSTIC DEVICE SIMULATION SYSTEM WITH DIGITAL TWIN ACOUSTIC ROBOT AND SIMULATION METHOD THEREOF**

(30) Priority: 01.08.2024 US 202463678535 P
(71) Applicant: Cheng Uei Precision Industry Co., Ltd., New Taipei City 23680 (TW)
(72) Inventor: LEE, JAMES CHENG, La Habra, CA90631 (US); WU, KUO-YANG, 23680 New Taipei City (TW); CHUNG, HSIANG-LING, 23680 New Taipei City (TW); YANG, YI-LIN, 23680 New Taipei City (TW); LIN, HENG-CHUAN, 23680 New Taipei City (TW); WANG, YI-SIANG, 23680 New Taipei City (TW)
(74) Representative: Murgitroyd & Company

(57) **Abstract**

A acoustic device simulation system with digital twin acoustic robot comprising: a computing device and a simulation program which can be executed by the computing device to cause the computing device to perform operations comprising the following steps: receiving data from a physical system to create an acoustic computer-assisted engineering model; importing data from the operation of the physical system into the acoustic computer-assisted engineering model, and generating a digital twin virtual three-dimensional model; running a physical simulation through the digital twin virtual three-dimensional model; and modifying or replacing the simulation conditions of the digital twin virtual three-dimensional model in order to obtain simulation results under different conditions.

## Description

### CROSS REFERENCE TO RELATED APPLICATIONS

The present application is based on, and claims priority from, USA Patent Application No. 63/678,535, filed Aug. 1, 2024, the disclosure of which is hereby incorporated by reference herein in its entirety.

### BACKGROUND OF THE INVENTION

### Field of the Invention

The present invention generally relates to a simulation system, in particular to an acoustic device simulation system with digital twin acoustic robot.

### Description of Related Art

Traditional digital simulation techniques have been widely applied in product design and engineering analysis of acoustic devices for many years. These techniques typically involve creating mathematical models of products or systems and simulating them under specific conditions. However, traditional digital simulation techniques have several limitations:

Traditional digital simulations are usually based on fixed input parameters and assumptions, conducting static simulations that cannot dynamically reflect changes in actual operating environments. Moreover, simulations for different physical domains (such as structure, thermal, fluid, electromagnetic interference, etc.) are typically conducted separately, making it difficult to comprehensively consider the interactions between various factors. In terms of application scenarios, traditional digital simulation techniques are mainly used for design verification, with limited ability to predict behavior and performance throughout the entire product lifecycle. Therefore, in the traditional acoustic device design process, even after digital simulation, multiple design of experiment validation is still required.

Therefore, it is necessary to provide an acoustic device simulation system with digital twin acoustic robot that can integrate multiple data sources, simultaneously simulate multiple physical domains, and conduct predictive analysis throughout the entire product lifecycle.

### BRIEF SUMMARY OF THE INVENTION

An object of the present invention is to provide an acoustic device simulation system with digital twin acoustic robot, comprising: a computing equipment and a simulation program, wherein when the simulation program is executed by the computing equipment, it causes the computing equipment to perform operations comprising the following steps: receiving various data of a physical system to establish an acoustic computer-aided engineering model; importing operational data of the physical system into the acoustic computer-aided engineering model, and generating and optimizing a digital twin virtual three-dimensional model through machine learning; running physical simulations through the digital twin virtual three-dimensional model; and modifying or replacing simulation conditions of the digital twin virtual three-dimensional model to obtain simulation results under different conditions.

Another object of the present invention is to provide a digital twin acoustic robot-assisted acoustic device simulation method, comprising: receiving various data of a physical system to establish an acoustic computer-aided engineering model; importing operational data of the physical system into the acoustic computer-aided engineering model, and generating and optimizing a digital twin virtual three-dimensional model through machine learning; running physical simulations through the digital twin virtual three-dimensional model; and modifying or replacing simulation conditions of the digital twin virtual three-dimensional model to obtain simulation results under different conditions.

As described above, the acoustic device simulation system with digital twin acoustic robot, comprising: a computing equipment and a simulation program. When the simulation program is run by the computing equipment, it enables the computing equipment to perform operations including the following steps: receive various data of a physical system to establish an acoustic computer-aided engineering model; import the operational data of the physical system into the acoustic computer-aided engineering model, and generate a digital twin virtual 3D model; run physical simulations through the digital twin virtual 3D model; and modify or replace the simulation conditions of the digital twin virtual 3D model to obtain simulation results under different conditions. And thus provides an acoustic device simulation system with digital twin acoustic robot that integrates multiple data sources, simultaneously simulates multiple physical domains, and conducts predictive analysis throughout the entire product lifecycle.

### BRIEF DESCRIPTION OF THE DRAWINGS

The present invention will be apparent to those skilled in the art by reading the following description, with reference to the attached drawings, in which:
FIG. 1 is a system block diagram of an acoustic device simulation system with digital twin acoustic robot of the present invention.
FIG. 2 is a block flow diagram of the acoustic device simulation system with digital twin acoustic robot of the present invention.

### DETAILED DESCRIPTION OF THE INVENTION

Digital twin technology is an advanced digital representation technique that provides a virtual replica of real-world systems, which includes dynamic digital models of physical entities, processes, or systems. Through digital twins, each component of a system is precisely modeled, and the relationships between components and between components and their environment are captured. This technology combines the Internet of Things, artificial intelligence, machine learning, and software analytics to create digital models that can be updated and altered, thereby reflecting the real-time status of their physical counterparts. During system operation, the digital twin generates data that is fed back into itself, for better revealing the relationships between design models and their physical counterparts, meanwhile capturing past engineering decisions and incorporating lessons learned from these decisions as part of the digital twin's analytical history.

The present invention provides product design and engineering analysis technicians with an acoustic device simulation system with digital twin acoustic robot that integrates multiple data sources, simulates multiple physical domains, and conducts long-term and real-time predictive analysis of products. Users can simultaneously perform simulations across multiple physical domains for acoustic products under design, replace any component in the product and re-test when simulation results are unsatisfactory, adjust various environmental parameters to test the interactive effects between the product and environmental factors, and conduct predictive analysis throughout the entire product lifecycle.

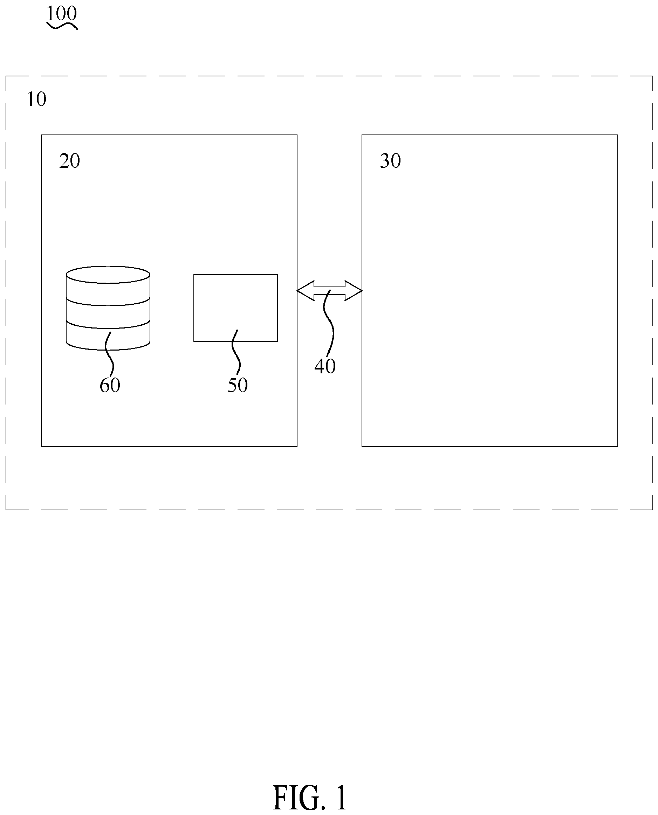

FIG. 1 discloses a system block diagram of the acoustic device simulation system with digital twin acoustic robot 100 of the present invention, which is established on a distributed data processing environment 10. The distributed data processing environment 10 is a system architecture that distributes data processing tasks across multiple interconnected computers or devices. Computing and storing resources in the distributed data processing environment 10 are dispersed across multiple nodes or devices. These nodes can be servers, personal computers, or other computing devices interconnected through a network to collectively complete data processing tasks. It should be noted that FIG. 1 only discloses the architecture of one feasible embodiment and does not impose any limitations on environments that can realize different embodiments.

In this preferred embodiment, the distributed data processing environment 10 comprises a computing equipment 20 and at least a physical system 30 which is connected with the computing equipment 20 via a network 40. The network 40 can be configured as a telecommunications network, a Local Area Network (LAN), a Wide Area Network (WAN), or a combination of the aforementioned three, and may include wired, wireless, or fiber optic connections. The network 40 may include one or more wired and/or wireless networks and is capable of receiving and transmitting data, instructions, or multimedia signals in real-time and bidirectionally. Generally, the network 40 is any combination that interconnects and coordinates communication between the computing equipment 20, the physical system 30, and other devices (not shown in the figure) in the distributed data processing environment 10.

In this preferred embodiment, the computing equipment 20 is configured as a server computing system utilizing multiple computers as servers, such as a cloud computing environment. The computing equipment 20 includes a simulation program 50. In a preferred embodiment, the simulation program 50 is a program, an application, or a subroutine within a larger program for designing and validating acoustic devices. In another feasible embodiment, the simulation program 50 is independently installed on any other device accessible by the computing equipment 20 via the network 40.

In a preferred embodiment, the computing equipment 20 includes a database 60, which is accessed and managed by the simulation program 50. In another feasible embodiment, the database 60 is independently accessed and managed by the simulation program 50 installed on other devices accessible by the computing equipment 20 via the network 40. The database 60 is configured to store, collect, compare, and/or combine data. In one feasible embodiment, the database 60 is independently installed outside the computing equipment 20 and can be accessed by the computing equipment 20 via the network 40. In another feasible embodiment, the database 60 is installed within the computing equipment 20. In yet another feasible embodiment, the database 60 is independently installed on other devices (not shown in the figure) accessible by the computing equipment 20 via the network 40. The database 60 stores, but is not limited to, digital twin virtual three-dimensional models, operational data of the physical system 30, and simulation data created by the simulation program 60.

The database 60 can be configured as any volatile or non-volatile storage medium used in the field for storing data, such as: magnetic tapes, optical discs, one or multiple independent hard drives, multiple hard drives in a Redundant Array of Independent Disks (RAID), Solid State Drives (SSD), or Random Access Memory (RAM). Similarly, the database 60 can be implemented using any suitable storage system structure in the field, such as: Relational Database Management Systems (RDBMS), Non-Relational Databases (NoSQL), Object-Oriented Databases, or one or more data tables.

The physical system 30 includes various physical devices applied during the design and validation of acoustic devices. The physical system 30 can be various physical components in trial production, including but not limited to: acoustic units, magnets in acoustic units, voice coils, diaphragms, ring, pole piece, frame, insulating material, housings of acoustic devices, etc., as well as sensors for receiving various signals from the environment or the physical components.

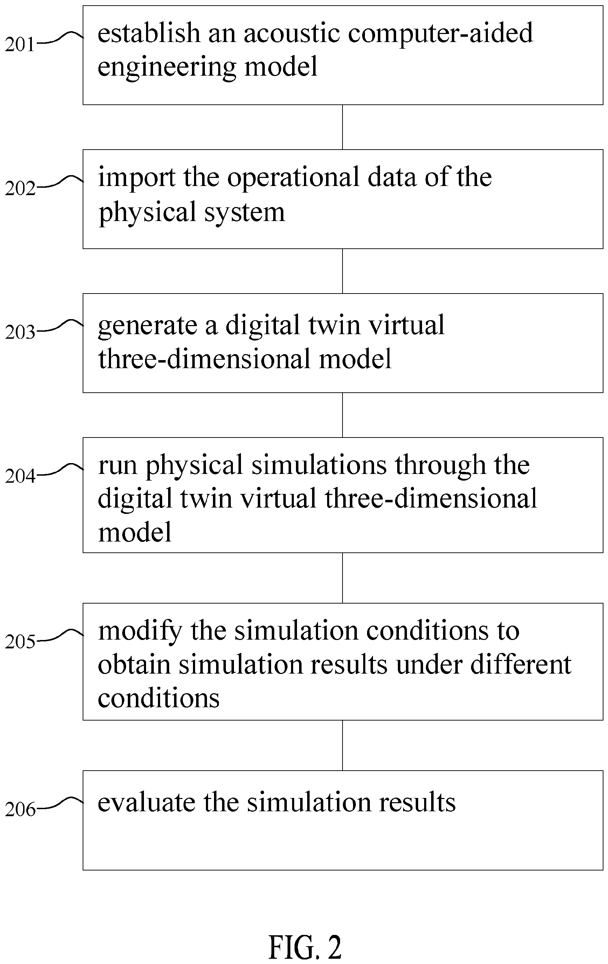

Please refer to FIG. 2, which describes the block flow diagram of the acoustic device simulation system with digital twin acoustic robot 100 of the present invention for acoustic device design and validation. In this preferred embodiment, the user initiates the simulation program 50 to evaluate whether the performance parameters of the acoustic device under design meet the target. The simulation program 50 includes the following steps:

Step 201: Receive various data from the physical system 30 to establish an acoustic computer-aided engineering model of an acoustic device to be validated and its validation environment of the physical system 30. In this preferred embodiment, the various data of the physical system 30 include, but are not limited to: dimensional data, material data, position data, and acoustic performance data of different components. In a preferred embodiment, the dimensional data can be, but is not limited to, created or set when drawing a component image using drawing software installed on the computing equipment 20. The component image is a three-dimensional image, and the dimensional data may include, but is not limited to, the length L along an axis D1, the width W along an axis D2, the height H along an axis D3, perforation diameter, and groove depth, with each dimension not limited to actual dimensions or image scale dimensions. Axes D1~D3 are perpendicular to each other. The material data may include, but is not limited to, density and Young's modulus. The position data may be, but is not limited to, obtained from sampling pixel coordinates of the component image. The acoustic performance data may include, but is not limited to, frequency response, sensitivity, impedance, distortion, Thiele/Small parameters, noise level, dynamic range, distortion, and linearity of each component. Once the acoustic computer-aided engineering model is established, every aspect of the acoustic device to be tested and the test environment is modeled as a virtual replica in the acoustic computer-aided engineering model. These models combine to create a virtual model of the physical system 30.

Step 202: Import the operational data of the physical system 30 into the acoustic computer-aided engineering model. In a feasible embodiment, the operational data of the physical system 30 includes, but is not limited to: electrical signals input to the acoustic device to be validated and physical quantities measured by various sensors in the physical system 30.

Step 203: Generate a digital twin virtual three-dimensional model through machine learning by combining the acoustic computer-aided engineering model and the operational data of the physical system 30. In a feasible embodiment, the computing equipment 20 generates simulation results based on the received operational data using the acoustic computer-aided engineering model, and further cross-validates some or all of the received operational data with the simulation results of the acoustic computer-aided engineering model through machine learning to generate the digital twin virtual three-dimensional model and evaluate the predictive model performance of the digital twin virtual three-dimensional model. Then, it optimizes the predictive model performance of the digital twin virtual three-dimensional model through parameter updates and iterations.

Step 204: Run physical simulations through the digital twin virtual three-dimensional model, while receiving and updating various state updates of the environment of the physical system 30 in the digital twin virtual three-dimensional model to update and run future simulations. In a feasible embodiment, simulations can be conducted interactively, allowing users to view results using 2-D graphs, 3-D graphs, or customized visualization outputs generated through custom programming. In this embodiment, users can interact with the visualization (e.g., zoom, pan, and/or other types of interactions) to explore simulation results.

Step 205: Modify or replace the simulation conditions of the digital twin virtual three-dimensional model to obtain simulation results under different conditions, and store the simulation results in the database 60. In a feasible embodiment, users can interactively change the simulation conditions of the digital twin virtual three-dimensional model, such as: changing model parameters of various components, adding and/or replacing other types of components. In another feasible embodiment, based on the design goals and design constraints set by the user, the digital twin virtual three-dimensional model changes simulation conditions in batches within the constrained range to generate at least one topology model.

Step 206: Evaluate the simulation results. In a feasible embodiment, multiple simulation results created in steps 204 and 205 are presented to the user in graphical or tabular form to evaluate the optimal simulation results. In another feasible embodiment, the user evaluates the model performance of multiple simulation results created in steps 204 and 205 through custom programming or algorithms.

Through this simulation process, the tedious steps of actually producing a large number of samples can be effectively reduced, saving significant time and improving the efficiency of small-batch Design of Experiment validation, while also reducing the impact of interfering variables in the design process. Ultimately, this reduces the human resources, time, and material costs consumed in product design. By utilizing this simulation technology, designers can more accurately predict product performance, optimize the design process, and enhance product competitiveness.

## Claims

1. An acoustic device simulation system with digital twin acoustic robot, comprising:
a computing equipment and a simulation program, wherein when the simulation program is executed by the computing equipment, it causes the computing equipment to perform operations comprising the following steps:
receiving various data of a physical system to establish an acoustic computer-aided engineering model;
importing operational data of the physical system into the acoustic computer-aided engineering model, and generating and optimizing a digital twin virtual three-dimensional model through machine learning;
running physical simulations through the digital twin virtual three-dimensional model; and modifying or replacing simulation conditions of the digital twin virtual three-dimensional model to obtain simulation results under different conditions.

2. The acoustic device simulation system with digital twin acoustic robot as claimed in claim 1, wherein the physical system comprises at least one physical component to be tested and at least one sensor for receiving signals from the physical component.

3. The acoustic device simulation system with digital twin acoustic robot as claimed in claim 1, wherein the computing equipment is connected with the physical system via a network, enabling real-time and bidirectional reception and transmission of data, instructions, or multimedia signals between the computing equipment and the physical system.

4. The acoustic device simulation system with digital twin acoustic robot as claimed in claim 2, wherein the various data of the physical system include at least one of the following data: dimensional data of the physical component, material data of the physical component, position data of the physical component, frequency response of the physical component, sensitivity of the physical component, impedance of the physical component, distortion of the physical component, Thiele/Small parameters of the physical component, noise level of the physical component, dynamic range of the physical component, distortion of the physical component, and linearity of the physical component.

5. The acoustic device simulation system with digital twin acoustic robot as claimed in claim 1, wherein the step of modifying or replacing simulation conditions of the digital twin virtual three-dimensional model to obtain simulation results under different conditions includes at least one of the following operations: changing model parameters of various components in the digital twin virtual three-dimensional model, adding other types of components to the digital twin virtual three-dimensional model, replacing other types of components in the digital twin virtual three-dimensional model.

6. The acoustic device simulation system with digital twin acoustic robot as claimed in claim 1, wherein in the step of modifying or replacing simulation conditions of the digital twin virtual three-dimensional model to obtain simulation results under different conditions, the digital twin virtual three-dimensional model changes simulation conditions in batches within the constraints according to design goals and design constraints to generate at least one topology model.

7. A digital twin acoustic robot-assisted acoustic device simulation method, comprising:
receiving various data of a physical system to establish an acoustic computer-aided engineering model;
importing operational data of the physical system into the acoustic computer-aided engineering model, and generating and optimizing a digital twin virtual three-dimensional model through machine learning;
running physical simulations through the digital twin virtual three-dimensional model; and modifying or replacing simulation conditions of the digital twin virtual three-dimensional model to obtain simulation results under different conditions.

8. The digital twin acoustic robot-assisted acoustic device simulation method as claimed in claim 7, wherein the physical system comprises at least one physical component to be tested and at least one sensor for receiving signals from the physical component.

9. The digital twin acoustic robot-assisted acoustic device simulation method as claimed in claim 7, wherein the computing equipment is connected with the physical system via a network, enabling real-time and bidirectional reception and transmission of data, instructions, or multimedia signals between the computing equipment and the physical system.

10. The digital twin acoustic robot-assisted acoustic device simulation method as claimed in claim 8, wherein the various data of the physical system include at least one of the following data: dimensional data of the physical component, material data of the physical component, position data of the physical component, frequency response of the physical component, sensitivity of the physical component, impedance of the physical component, distortion of the physical component, Thiele/Small parameters of the physical component, noise level of the physical component, dynamic range of the physical component, distortion of the physical component, and linearity of the physical component.

11. The digital twin acoustic robot-assisted acoustic device simulation method as claimed in claim 7, wherein the step of modifying or replacing simulation conditions of the digital twin virtual three-dimensional model to obtain simulation results under different conditions includes at least one of the following operations: changing model parameters of various components in the digital twin virtual three-dimensional model, adding other types of components to the digital twin virtual three-dimensional model, replacing other types of components in the digital twin virtual three-dimensional model.

12. The digital twin acoustic robot-assisted acoustic device simulation method as claimed in claim 7, wherein in the step of modifying or replacing simulation conditions of the digital twin virtual three-dimensional model to obtain simulation results under different conditions, the digital twin virtual three-dimensional model changes simulation conditions in batches within the constraints according to design goals and design constraints to generate at least one topology model.

## Amended claims

### Amended claims in accordance with Rule 137(2) EPC.

1. An acoustic device simulation system with digital twin acoustic robot, comprising:
a computing equipment and a simulation program, wherein when the simulation program is executed by the computing equipment, it causes the computing equipment to perform operations comprising the following steps:
receiving various data of a physical system to establish an acoustic computer-aided engineering model;
importing operational data of the physical system into the acoustic computer-aided engineering model, and generating and optimizing a digital twin virtual three-dimensional model through machine learning;
running physical simulations through the digital twin virtual three-dimensional model; and
modifying or replacing simulation conditions of the digital twin virtual three-dimensional model to obtain simulation results under different conditions.

2. The acoustic device simulation system with digital twin acoustic robot as claimed in claim 1, wherein the physical system comprises at least one physical component to be tested and at least one sensor for receiving signals from the physical component.

3. The acoustic device simulation system with digital twin acoustic robot as claimed in claim 1, wherein the computing equipment is connected with the physical system via a network, enabling real-time and bidirectional reception and transmission of data, instructions, or multimedia signals between the computing equipment and the physical system.

4. The acoustic device simulation system with digital twin acoustic robot as claimed in claim 2, wherein the various data of the physical system include at least one of the following data: dimensional data of the physical component, material data of the physical component, position data of the physical component, frequency response of the physical component, sensitivity of the physical component, impedance of the physical component, distortion of the physical component, Thiele/Small parameters of the physical component, noise level of the physical component, dynamic range of the physical component, distortion of the physical component, and linearity of the physical component.

5. The acoustic device simulation system with digital twin acoustic robot as claimed in claim 1, wherein the step of modifying or replacing simulation conditions of the digital twin virtual three-dimensional model to obtain simulation results under different conditions includes at least one of the following operations: changing model parameters of various components in the digital twin virtual three-dimensional model, adding other types of components to the digital twin virtual three-dimensional model, replacing other types of components in the digital twin virtual three-dimensional model.

6. The acoustic device simulation system with digital twin acoustic robot as claimed in claim 1, wherein in the step of modifying or replacing simulation conditions of the digital twin virtual three-dimensional model to obtain simulation results under different conditions includes at least one of the following operations: the digital twin virtual three-dimensional model changes simulation conditions in batches within the constraints according to design goals and design constraints to generate at least one topology model, the digital twin virtual three-dimensional model recommends optimal simulation conditions to generate at least one topological model through mechanical learning based on simulation results in a constrained range.

7. A digital twin acoustic robot-assisted acoustic device simulation method, comprising:
receiving various data of a physical system to establish an acoustic computer-aided engineering model;
importing operational data of the physical system into the acoustic computer-aided engineering model, and generating and optimizing a digital twin virtual three-dimensional model through machine learning;
running physical simulations through the digital twin virtual three-dimensional model; and modifying or replacing simulation conditions of the digital twin virtual three-dimensional model to obtain simulation results under different conditions.

8. The digital twin acoustic robot-assisted acoustic device simulation method as claimed in claim 7, wherein the physical system comprises at least one physical component to be tested and at least one sensor for receiving signals from the physical component.

9. The digital twin acoustic robot-assisted acoustic device simulation method as claimed in claim 7, wherein the computing equipment is connected with the physical system via a network, enabling real-time and bidirectional reception and transmission of data, instructions, or multimedia signals between the computing equipment and the physical system.

10. The digital twin acoustic robot-assisted acoustic device simulation method as claimed in claim 8, wherein the various data of the physical system include at least one of the following data: dimensional data of the physical component, material data of the physical component, position data of the physical component, frequency response of the physical component, sensitivity of the physical component, impedance of the physical component, distortion of the physical component, Thiele/Small parameters of the physical component, noise level of the physical component, dynamic range of the physical component, distortion of the physical component, and linearity of the physical component.

11. The digital twin acoustic robot-assisted acoustic device simulation method as claimed in claim 7, wherein the step of modifying or replacing simulation conditions of the digital twin virtual three-dimensional model to obtain simulation results under different conditions includes at least one of the following operations: changing model parameters of various components in the digital twin virtual three-dimensional model, adding other types of components to the digital twin virtual three-dimensional model, replacing other types of components in the digital twin virtual three-dimensional model.

12. The digital twin acoustic robot-assisted acoustic device simulation method as claimed in claim 7, wherein in the step of modifying or replacing simulation conditions of the digital twin virtual three-dimensional model to obtain simulation results under different conditions includes at least one of the following operations: the digital twin virtual three-dimensional model changes simulation conditions in batches within the constraints according to design goals and design constraints to generate at least one topology model, the digital twin virtual three-dimensional model recommends optimal simulation conditions to generate at least one topological model through mechanical learning based on simulation results in a constrained range.
